# EUROPÄISCHE PATENTANMELDUNG

(11) **EP 1 783 176 A2**
(43) Veröffentlichungstag der Anmeldung: **09.05.2007**
(21) Anmeldenummer: 06021489.7
(22) Anmeldetag: 13.10.2006
(51) Int. Cl.: C09B 67/20, A01C 1/06

(54) **Wässrige Farbmittelzusammensetzungen für den Einsatz bei der Saatgutbehandlung**

(30) Priorität: 25.10.2005 DE 102005050995
(71) Anmelder: Clariant Produkte (Deutschland) GmbH, 65929 Frankfurt am Main (DE)
(72) Erfinder: Heinrichs, Franz-Leo, Dr., 86456 Gablingen (DE); Gramsamer, Armin, 86368 Gersthofen (DE); Müller, Olaf, 61462 Königstein (DE)
(74) Vertreter: Paczkowski, Marcus

(57) **Zusammenfassung**

Wässrige Farbmittelzusammensetzungen enthalten mindestens ein Wachscopolymer A, ein Farbmittel B, ein filmbildendes Netzmittel C und anderen für die Herstellung von wässrigen Farbmittelpräparationen üblichen Zusätzen und lassen sich zur Einfärbung von Saatgut verwenden. Die Farbmittelzusammensetzungen kombinieren in sich die Eigenschaften von Wachsdispersionen, Polymerdispersionen und Farbmittelpräparationen. Das bedeutet, sie bilden eine wachsartige Filmoberfläche aus, besitzen gute Haftung, bewirken eine gute Verteilung von Wirkstoff und Farbmittel auf der Oberfläche des Saatguts und zeigen verbesserte Fließeigenschaften ohne negativen Einfluss auf die Keimung des Saatguts.

## Beschreibung

Die vorliegende Erfindung betrifft wässrige Farbmittelzusammensetzungen und deren Einsatz bei der Behandlung von Saatgut, ggf. in Kombination mit Pflanzenschutzmittel.

Wirkstoffformulierungen zur Saatgutbehandlung enthalten neben den Wirkstoffen als solchen üblicherweise Farbmittel, Netzmittel, Dispergiermittel, Emulgatoren, Entschäumer, Konservierungsmittel, Trocknungssteuermittel, Verdicker, Lösemittel, Kleber und biologisch abbaubare Polymere. Zur Verbesserung der Verteilung und Haftung werden bei der Saatgutbehandlung aber auch noch externe Zusatzstoffe eingesetzt wie Netzmittel, Dispergierhilfsmittel oder Kleber. Insbesondere eingesetzt werden Kleber zur Verbesserung der Haftung. Als Kleber werden synthetische Polymere wie Polyvinylacetale, Polyvinylalkohole, Polyvinylpyrrolidone oder Alkylcellulose eingesetzt. Diese Hilfsmittel können mit allen Arten der Wirkstoffformulierung eingesetzt werden.

Als Wirkstoffformulierungen werden Dispersionen auf Wasser oder Ölbasis SC, Spritzpulver WP, emulgierbare Konzentrate EC, wässrige Lösungen SL, Suspoemulsionen SE, Stäubemittel DP, wasserdispergierbare Granulate WG eingesetzt. Vorzugsweise werden Dispersionen auf Wasserbasis eingesetzt, die so genannten Fluid Seedtreatment Formulierungen.

Für den Vorgang der Saatgutbehandlung mit Wirkstoffformulierungen finden die praxisüblichen Verfahren Verwendung, die auch als Beizverfahren bezeichnet werden. Vorzugsweise kann es sich dabei handeln um:
- Trockenbeizen, vorzugsweise unter Zusatz von Haftvermittlern wie z.B. Paraffinölen oder Talkum;
- Schlämmbeizen, vorzugsweise unter Zusatz von Netzmitteln, Dispergiermitteln, Emulgatoren, Klebern, inerten Füllstoffen und Farbstoffen;
- wässrige Flüssigbeizen, vorzugsweise unter Zusatz von Emulgatoren, Dispergiermitteln, Verdickungsmitteln, Frostschutzmitteln, Polymeren, Klebern und Farbstoffen
- Lösemittelhaltige Flüssigbeizen, vorzugsweise unter Zusatz von Lösemitteln und Farbstoffen
- Emulsionsbeizen, vorzugsweise unter Zusatz von Emulgatoren, Lösemitteln und Farbstoffen.

Die Beizung erfolgt in praxisüblichen Beizgeräten oder Trommelmischern, wie sie in der Bauindustrie üblich sind.

Die Aufstellung der einzelnen Verfahren und die dafür benötigten Zusatzstoffe sind vielfältig und müssen im Einzelfall immer wieder aufeinander abgestimmt werden. Dabei zeigen einzelne Bestandteile durchaus nachteilige Wirkung auf das Keimverhalten des behandelten Saatgutes.

Insbesondere ist bekannt, dass eine zu große Aufwandmenge an Klebern zwar die Haftung verbessert, die Keimung aber nachhaltig stören kann. Ebenso ist bekannt, dass Netz und Dispergiermittel die Migration von Wirkstoffen in das Saatgut fördern und somit ebenfalls nachteilig auf die Keimung wirken können. Oft ist auch nicht vorhersehbar, wie sich die Inhaltsstoffe der Farbmittel oder Kleberformulierungen auf das Keimverhalten auswirken.

Es bestand daher die Aufgabe, ein einfaches, gut verträgliches Bindemittel/Klebersystem, gegebenenfalls kombiniert mit Farbmitteln, zu entwickeln, um die Komplexität der Beize zu mindern, um gleichzeitig damit aber die Beizwirkung der Wirkstoffformulierungen zu verbessern, ohne aber dabei das Keimverhalten des Saatguts nachteilig zu verändern.

Gelöst wird diese Aufgabe durch eine wässrige Farbmittelzusammensetzung, die mindestens ein Wachscopolymer A, ein Farbmittel B und ein filmbildendes Netzmittel C neben anderen, für die Herstellung von wässrigen Farbmittelpräparationen üblichen Zusätzen enthält.

Die erfindungsgemäße Farbmittelzusammensetzung ist geeignet, in Kombination mit vereinfachten Beizmittelformulierungen, vor allem mit handelsüblichen Fungiziden und Insektiziden, eingesetzt zu werden und erfüllt die gestellten Forderungen. Das System aus erfindungsgemäßer Farbmittelzusammensetzung und Beizmittel kann mit allen Arten von Formulierungen, trocken, geschlämmt, dispergiert oder in Lösung kombiniert werden. Der Wirkstoff wird überraschend gleichmäßig verteilt und in einem Film auf der Oberfläche des Saatguts fixiert. Die Filmbildung erfolgt sehr schnell, das gebeizte Saatgut ist nicht klebrig und ist leicht zu fördern. Vor allem wird durch die erfindungsgemäße Farbmittelzusammensetzung die Keimfähigkeit des damit behandelten Saatgutes nicht verschlechtert, in Gegenteil, das Keimverhalten wurde eher noch vereinheitlicht.

Als Wachscopolymer A enthält die Farbmittelzusammensetzung vorzugsweise das Umsetzungsprodukt von polymerisierbaren Wachsverbindungen, vorzugsweise von Polyolwachsester, mit ethylenisch ungesättigten Säuren, vorzugsweise mit Acrylsäure, Methacrylsäure und/oder deren Derivaten wie Acrylsäureestern und/oder Acrylsäureamiden, Methacrylsäureestern und/oder Styrol oder Styrolderivaten. Dieses Polymer bildet einen Film mit kristallinen Bereichen, der sich für den Stoffaustausch des Saatkorns mit seiner Umgebung wie die natürliche Wachsschicht auf Pflanzen und Samenkörnern verhält. Unter Polyolwachsesteracrylat ist hier das Umsetzungsprodukt von einem mehrwertigen Alkohol, wie Glycerin, Trimethylolpropan oder Pentaerythrit, mit einer Wachssäure wie z.B. technische Montanwachssäure und mit einer ethylenisch ungesättigten Säure wie z.B. Acrylsäure zu verstehen. Ein kommerziell verfügbares Produkt dieser Art ist Pentaerythrit-2,5-Montanat-Acrylat, das unter dem Markennamen "Licomont" ER 165 von der Firma Clariant vertrieben wird. Die Herstellung eines solchen Polymers erfolgt bevorzugt nach dem Verfahren der Emulsionspolymerisation mit voremulgiertem Wachs und Acrylsäure/Methacrylsäure, Acrylsäureestern und oder Styrol.

Als Farbmittel B enthält die erfindungsgemäße Farbmittelzusammensetzung für die Anwendung auf Saatgut übliche Pigmente in Form von Pulver oder wässrigen Präparationen. Unerwünschte Sedimentation konnte nicht beobachtet werden.

Als filmbildende Netzmittel C enthält die erfindungsgemäße Farbmittelzusammensetzung vorzugsweise wachsartige Ethoxylate wie z.B. Montanwachssäureethoxylat, Wachsalkoholethoxylat oder Wachsethoxylat. Der Ethoxylatanteil unterstützt sowohl die Verteilung des Wirkstoffes als auch den Stoffaustausch und vor allem die Aufnahme von Feuchtigkeit, während der Wachsanteil gut mit dem Polymer kombinierbar ist und zur Filmbildung beiträgt.

Die erfindungsgemäße Farbmittelzusammensetzung vereinfacht die Beize in erheblichem Maß. Die Beize kann sowohl eingefärbt als auch neutral kombiniert werden. Das Resultat ist in jedem Fall ein Saatgut, auf dem der Wirkstoff und das Farbmittel homogen verteilt sind, das gegen Abrieb geschützt ist, das ein gleichmäßiges und schnelles Keimen gewährleistet und das optisch ansprechend gestaltet ist.

### Ausführungsbeispiele:

### Rohstoff 1:

Wachscopolymer Styrol/Acrylat mit MFT 32

| Substanz | Menge | | Viskosität: | 150 cps, |
|---|---|---|---|---|
| Reaktivwachsdispersion | 450 | | Festkörper: | ca. 30 %, |
| Dispersogen LFES | 52,89 | | Transparenz: | ca. 55 % in 1 %iger Verdünnung, |
| Monomer 1 | 70,1 | | Dichte: | ca. 1,03 kg/l |
| Monomer 2 | 397,8 | | MFT: | ca. 32 |
| Ammoniumperoxodisulfat | 1,5 | | | |
| E-Wasser | 1019,36 | | | |
| Ascorbinsäure | 1,4 | | | |
| H₂O₂ 30 %-ig | 6,95 | | | |
| Ammoniak 25 %-ig | | | | |
| Saniprot 94-08 | 0,6 | | | |
| | | | | |

| **Monomerzusammensetzung :** | | | | |
|---|---|---|---|---|
| Styrol | Styrol | 99,4 | | |
| Methylmethacrylat | MMA | 124,5 | | |
| Ethylacrylat | EA | 257,5 | | |
| Methacrylsäure | MAS | 3,5 | | |

### Verfahrensbeschreibung:

Wasser und Emulgator werden im Reaktor vorgelegt und auf 75 °C erwärmt. In diese Mischung werden 15 % der Monomermenge 1 und der Initiator eingerührt. Nach dem Start der Reaktion wird die restliche Monomermenge 1 bei 80 °C über 1 h einpolymerisiert. Dann wird die Monomermischung 2 über die Zeitdauer von 2 h einpolymerisiert. Der Ansatz wird noch 90 min gerührt, abgekühlt, mit Ascorbinsäure, Wasserstoffperoxid und Konservierungsmittel versetzt und filtriert.

### Rohstoff 2:

Wachsethoxylatdispersion auf Basis ethoxylierter Montanwachssäure

### Substanz:

| | |
|---|---|
| Montanwachssäure EO 25 | 30 g |
| Wasser | 70 g |

| | |
|---|---|
| Montanwachssäure EO 25 = Montanwachssäure ethoxyliert mit 25 Ethylenoxideinheiten | |

### Verfahrensbeschreibung:

Das Wachs wird aufgeschmolzen und bei 85 °C in Wasser gelöst. Die Mischung wird dann abgekühlt

### Rohstoff 3:

Wachsethoxylatdispersion auf Basis ethoxylierter Wachsalkohole

### Substanz:

| | |
|---|---|
| Wachsalkohol EO 50 | 30 g |
| Wasser | 70 g |
| Wachsalkohol EO 50 = Alkoholkomponente aus Montanwachs oder Carnaubawachs ethoxyliert mit 50 Ethylenoxideinheiten | |

### Verfahrensbeschreibung:

Das Wachs wird aufgeschmolzen und bei 85°C in Wasser gelöst. Die Mischung wird dann abgekühlt

### Rohstoff 4:

| | |
|---|---|
| Wachscopolymerdispersion gemäß Rohstoff 1 | 33,5 g |
| Wachsethoxylatdispersion gemäß Rohstoff 2 | 33,5 g |
| Wasser | 33,0 g |

### Verfahrensbeschreibung:

Die Dispersionen gemäß Rohstoffbeispiel 1 und Rohstoffbeispiel 2 werden gemischt und mit Wasser verdünnt. Die so hergestellte Dispersion kann zur Beschichtung eingesetzt werden.

### Rohstoff 5:

| | |
|---|---|
| Wachscopolymerdispersion gemäß Rohstoff 1 | 50,00 g |
| Wachsethoxylatdispersion gemäß Rohstoff 2 | 50, 00 g |

### Verfahrensbeschreibung:

Die Dispersionen gemäß Rohstoffbeispiel 1 und Rohstoffbeispiel 2 werden gemischt Die so hergestellte Dispersion kann zur Beschichtung eingesetzt werden.

### Rohstoff 6:

| | |
|---|---|
| Wachscopolymerdispersion gemäß Rohstoff 1 | 35,00 g |
| Wachsethoxylatdispersion gemäß Rohstoff 3 | 20, 00 g |
| Fettalkoholethoxylat | 15,00 g |
| Wasser | 30,00 g |

### Verfahrensbeschreibung:

Die Dispersionen gemäß Rohstoffbeispiel 1 und Rohstoffbeispiel 3 werden gemischt und mit Wasser verdünnt. In diese Mischung wird noch ethoxylierter Fettalkohol, z.B. ethoxylierter Oleylalkohol mit 10 Ethylenoxideinheiten eingearbeitet. Die so hergestellte Dispersion kann zur Beschichtung eingesetzt werden.

**Tabelle 1**

| Beispiele P1 bis P7 für Erfindungsgemäße Farbmittelzusammensetzungen, zur Präparation von Weizen | | | | | | | |
|---|---|---|---|---|---|---|---|
| | P1 | P2 | P3 | P4 | P5 | P6 | P7 |
| Flexonyl-Orange G100 | 0,5 | | | | | | |
| Flexonyl-Rot A-LCLL | | 0,5 | | | 0,5 | 0,5 | |
| Flexonyl-Rot FGR131 | | | | | | | 0,5 |
| Viscofil-Rot A-WTS 30 | | | 0,5 | | | | |
| Sandosperse Rubine WF571 | | | | 0,5 | | | |
| Wasser | 0,75 | 0,75 | 0,75 | 0,75 | 0,75 | 0,75 | 0,75 |
| Dispersion nach Rohstoff 4 | | | | | 4 | 4 | 4 |
| Dispersion nach Rohstoff 5 | 1 | 1 | 1 | 1 | | | |

| | | | | | | | |
|---|---|---|---|---|---|---|---|
| Mengenangaben jeweils in Gramm | | | | | | | |

Für die Einfärbung von Weizen wurden die erfindungsgemäßen Farbmittelzusammensetzungen so eingestellt, dass der Pigmentgehalt bei 1 bis 6 % liegt, so dass 5 bis 30 g Pigment pro t zum Einsatz kommen.

**Tabelle 2**

| Beizung von Weizen: (auf 1000 Gewichtsteile Weizen kommen die in der Tabelle angegebenen Gewichtsteile an Beschichtungsmasse) | | | | | | | |
|---|---|---|---|---|---|---|---|
| Weizen | 1000 | 1000 | 1000 | 1000 | 1000 | 1000 | 1000 |
| Wirkstoff farblos | 1 | 1 | 1 | 1 | 1 | 1 | 1 |
| Präparation gemäß | P1 | P2 | P3 | P4 | P5 | P6 | P7 |
| Menge Präparation | 2,25 | 2,25 | 2,25 | 2,25 | 5,25 | 5,25 | 5,25 |
| Füllstoff: Talkum | 0,75 | 0,75 | 0,75 | 0,75 | 0,75 | 0,75 | 0,75 |
| Wasser | 1 | 1 | 1 | 1 | 0 | 2 | 2 |

| | | | | | | | |
|---|---|---|---|---|---|---|---|
| Mengenangaben jeweils in Gramm | | | | | | | |

Der Wirkstoff wurde mit Wasser verdünnt, mit der Farbmittelzusammensetzung kombiniert und im Saatgutmischer auf das rotierende Gemisch aus Weizen und Talkum aufgegeben.

Zum Vergleich wurde eine Mischung aus 2 Teilen farbiger Wirkstoffpräparation Landor CT mit 2 Teilen Wasser gemischt aufgetragen. Der Pigmentgehalt war bei allen Anwendungen gleich.

Es wurde festgestellt, dass beim Einsatz der erfindungsgemäßen Präparation der Auftrag gleichmäßiger war, die Farbe intensiver und das Gleitverhalten verbessert war. Die Trocknungszeit war verkürzt.

Gegenüber der Verwendung von handelsüblichen Klebern waren das Trocknungsverhalten und das Fließverhalten deutlich verbessert.

**Tabelle 3**

| Beispiele P8 bis P15 für erfindungsgemäße Farbmittelzusammensetzungen Präparationen für Mais, Mengenangaben jeweils in Gramm | | | | | | | | |
|---|---|---|---|---|---|---|---|---|
| | P8 | P9 | P10 | P11 | P12 | P13 | P14 | P15 |
| Flexonyl-Orange G100 | | 1,5 | | | | | | |
| Flexonyl-Rot A-LCLL | | | 1,5 | | | | | |
| Viscofil-Rot A-WTS 30 | 1,5 | | | | | | | |
| Sandosperse Rubine WF571 | | | | 1,5 | | | | |
| Colanyl-Rot FGR 131 | | | | | 1,5 | | | |
| Viscofil Orange S-RL | | | | | | 1,5 | | |
| Viscofil-Violet BLN | | | | | | | 1,5 | |
| Viscofil-Blue A-BGS | | | | | | | | 1,5 |
| Dispersion nach 4 | 1,5 | 1,5 | 1,5 | 1,5 | 1,5 | 1,5 | 1,5 | 1,5 |
| Wasser | 3,0 | 3,0 | 3,0 | 3,0 | 3,0 | 3,0 | 3,0 | 3,0 |
| Schichtsilikat farblos | | | | | | | 5 | |
| Schichtsilikat bunt | | | | | | | | 5 |

Wasser und Copodispersion gemäß Rohstoffbeispiel 4 wurden gemischt. Der Mais wurde in den Mischbehälter gegeben und mit 10 Teilen der Wasser-Copomischung befeuchtet. Dann wurde das Talkum zugesetzt. Der Rest der Wasser-Copo Mischung wurde mit dem Wirkstoff kombiniert und über 15 s ebenfalls in den Mischer gegeben. Dann wurde noch 15 s nachgerührt und danach entleert.

**Tabelle 6**

| Beizung von Mais mit farbigem Zusatzstoff und Effektzusatz: (auf 1000 Gewichtsteile Mais kommen die in der Tabelle angegebenen Gewichtsteile an Beschichtungsmasse) | | |
|---|---|---|
| Mais | 1000 | 1000 |
| Wirkstoff farblos | 10 | 10 |
| Präparation gemäß | P14 | P15 |
| Füllstoff Talkum | 10 | 10 |
| Wasser | 20 | 20 |
| Dispersion nach 4 | 5 | 3 |

| | | |
|---|---|---|
| Mengenangaben jeweils in Gramm | | |

Wasser und Copodispersion gemäß Rohstoff 4 wurden gemischt. Der Mais wurde in den Mischbehälter gegeben und mit 10 Teilen der Wasser-Copomischung befeuchtet. Dann wurde das Talkum zugesetzt. Der Rest der Wasser-Copo Mischung wurde mit dem Wirkstoff und der Farbpräparation kombiniert und über 15 s ebenfalls in den Mischer gegeben. Dann wurde noch 15 s nachgerührt und dann entleert.

### Bewertung:

Gemäß Herstellerempfehlung wird Mesurol, rot eingefärbt, mit 10 bis 20 ml/kg Mais appliziert. In der Praxis werden Füller wie Gesteinsmehl oder Talkum zugesetzt, da die Trocknung und Haftung der Formulierung als zu schlecht eingestuft wird. Erkennbare Verbesserung konnte schon durch den Zusatz von Copodispersion gemäß Rohstoff 1 und 2 erreicht werden. Noch bessere Ergebnisse erreicht man, wenn man den Wirkstoff farblos formuliert und mit der fertigen erfindungsgemäßen Farbmittelpräparation kombiniert. Man erhält sehr schnell trocknendes Saatgut mit einer gut haftenden und gut gleitenden Beschichtung. Der Abrieb ist merklich geringer als bei der Beize gemäß Herstellerempfehlung.

In gleicher Weise kann auch mit anderen flüssig formulierten oder auch trockenen Beizwirkstoffen verfahren werden.

**Tabelle 7**

| Erfindungsgemäße Farbmittelzusammensetzungen P16 bis P25: | | | | | | | | | | |
|---|---|---|---|---|---|---|---|---|---|---|
| Präparationen für Raps | | | | | | | | | | |
| Präparation | P16 | P17 | P18 | P19 | P20 | P21 | P22 | P23 | P24 | P25 |
| Flexonyl-Orange G100 | 1,5 | | | | | | | | | |
| Viscofil-Rot A-WTS 30 | | 1,5 | | | | | | | | |
| Colanyl Gelb 2GXD500 | | | 1,5 | | | | | | | |
| Colanyl-RotFGR131 | | | | 1,5 | | | | | | |
| Viscofil Orange S-RL | | | | | 1,5 | | | | | |
| Viscofil Orange Pigment-Disp. | | | | | | 1,5 | | | | |
| Viscofil-Green A-GNS | | | | | | | 1,5 | | | |
| Viscofil-Violet BLN | | | | | | | | 1,5 | | |
| Viscofil-Blue A-BGS | | | | | | | | | 1,5 | |
| Flexonyl Weiß RS | | | | | | | | | | 1,5 |
| Wasser | 3 | 3 | 3 | 3 | 10 | 3 | 3 | 10 | 10 | 3 |
| Schichtsilikat farblos | | | | | 10 | | | | | |
| Schichtsilikat blau | | | | | | | | 10 | 10 | |
| Dispersion gemäß Rohstoff 4 | 1,5 | 1,5 | 1,5 | 1,5 | 1,5 | 1,5 | 1,5 | 1,5 | 1,5 | 1,5 |

| | | | | | | | | | | |
|---|---|---|---|---|---|---|---|---|---|---|
| Mengenangaben jeweils in Gramm | | | | | | | | | | |

**Tabelle 8**

| Beizung von Raps mit farbigem Zusatzstoff: | | | | | | | |
|---|---|---|---|---|---|---|---|
| Raps | 1000 | 1000 | 1000 | 1000 | 1000 | 1000 | 1000 |
| Wirkstoff farblos | 5 | 5 | 5 | 5 | 5 | 5 | 5 |
| Präparation gem. | P16 | P17 | P18 | P19 | P20 | P21 | P22 |
| Menge Präparation | 6 | 6 | 6 | 6 | 23 | 6 | 6 |
| Füllstoff Talkum | 17 | 17 | 17 | 17 | 17 | 17 | 17 |
| Wasser | 25 | 25 | 25 | 25 | 15 | 25 | 25 |
| Dispersion nach 5 | 1,5 | 1,5 | 1,5 | 1,5 | 2 | 1,5 | 1,5 |

| | | | | | | | |
|---|---|---|---|---|---|---|---|
| Mengenangaben jeweils in Gramm | | | | | | | |

Wasser und Copodispersion gemäß Rohstoff 5 wurden gemischt. Der Raps wurde in den Mischbehälter gegeben und mit 10 Teilen der Wasser-Copomischung befeuchtet. Dann wurde das Talkum zugesetzt. Der Rest der Wasser-Copo Mischung wurde mit dem Wirkstoff und der Farbpräparation kombiniert und über 15 s ebenfalls in den Mischer gegeben. Es wurde noch 15 s nachgerührt und dann entleert.

**Tabelle 9**

| Beizung von Raps mit farbigem Wirkstoff: | | | |
|---|---|---|---|
| Raps | 1000 | 1000 | 1000 |
| Wirkstoff Chinook | 20 | 20 | 20 |
| Dispersion nach 6 | 0 | 1,5 | 5 |
| Füllstoff Talkum | 20 | 20 | 25 |
| Wasser | 10 | 20 | 25 |

| | | | |
|---|---|---|---|
| Mengenangaben jeweils in Gramm | | | |

Wasser und Copodispersion gemäß Rohstoff 6 wurden gemischt. Der Raps wurde in den Mischbehälter gegeben und mit 10 Teilen der Wasser-Copomischung befeuchtet. Dann wurde das Talkum zugesetzt. Der Rest der Wasser-Copo Mischung wurde mit dem Wirkstoff kombiniert und über 15 s ebenfalls in den Mischer gegeben.

Es wurde noch 15 s nachgerührt und dann entleert. Durch den Zusatz der Copodispersion wurde die Verteilung und Haftung verbessert. Das Saatgut zeigte einen höheren Glanz.

**Tabelle 10**

| Beizung von Raps mit farbigem Zusatzstoff und Effektzusatz: | | |
|---|---|---|
| Raps | 1000 | 1000 |
| Wirkstoff farblos | 5 | 5 |
| Präparation gem. | P23 | P24 |
| Menge Präparation | 23 | 23 |
| Füllstoff Talkum | 20 | 20 |
| Wasser | 15 | 15 |
| Dispersion nach 5 | 2 | 2 |

| | | |
|---|---|---|
| Mengenangaben jeweils in Gramm | | |

Wasser und Copodispersion gemäß Rohstoff 5 wurden gemischt. Der Raps wurde in den Mischbehälter gegeben und mit 10 Teilen der Wasser-Copomischung befeuchtet. Dann wurde das Talkum zugesetzt. Der Rest der Wasser-Copo Mischung wurde mit dem Wirkstoff und der Farbpräparation kombiniert und über 15 s ebenfalls in den Mischer gegeben. Dann wurde noch 15 s nachgerührt und dann entleert.

Für alle behandelten Saatgutsorten wurden Keimversuche gemacht. Es wurde kein Unterschied zu den empfehlungsgemäß gebeizten Produkten festgestellt.

### Eingesetzte Farbmittel:

Für die Herstellung der erfindungsgemäßen farbigen Farbmittelzusammensetzungen wurden die nachfolgenden Farbmittel eingesetzt. Es handelt sich um Handelsprodukte der Clariant.
Flexonyl-Orange G100
Flexonyl-Rot A-LCLL
Flexonyl-RotFGR131
Flexonyl Weiß RS

Colanyl Gelb 2GXD500
Colanyl-RotFGR131
Viscofil Orange S-RL
Viscofil Orange Pigment-Disp.
Viscofil-Rot A-WTS 30
Viscofil-Green A-GNS
Viscofil-Violet BLN
Viscofil-Blue A-BGS

Die nachfolgend aufgeführten Glimmerpigmente der Fa Eckart wurden zur Erzielung optischer Effekte eingesetzt:
Perlglanzpigment PX1000
Perlglanzpigment Amethyst

Eingesetzte Füllstoffe:
Talkum, handelsüblich (Kunststoffqualität)
Limestone, handelsüblich (Kunststoffqualität)
Gesteinsmehl, handelsüblich (Düngemittelqualität)

Eingesetzte Wirkstoffe:
Landor CT / Bayer
   mit der Wirkstoffkombination Fludioxonil, Difenoconazol, Tebucaonazol
Solitär / Bayer
   mit der Wirkstoffkombination Fludioxonil, Cyprodinil, Tebucaonazol
Arena / Bayer
   mit der Wirkstoffkombination Fludioxonil, Tebucaonazol
Baytan / Bayer
   mit der Wirkstoffkombination Fluberidazol, Imazalil, Triadimenol
Mesurol / Bayer
   mit dem Wirkstoff Methiocarb
Chinook / Bayer
   mit der Wirkstoffkombination b Cyflutrin, Imidachloprid
Monceren / Bayer

## Patentansprüche

1. Wässrige Farbmittelzusammensetzungen enthaltend mindestens
- Wachscopolymer A,
- Farbmittel B,
- filmbildendes Netzmittel C
und andere, für die Herstellung von wässrigen Farbmittelpräparationen üblichen Zusätzen.

2. Farbmittelzusammensetzungen nach Anspruch 1, **dadurch gekennzeichnet, dass** das Wachscopolymer A ein Polymerisat ist von polymerisierbaren Wachsverbindungen mit ethylenisch ungesättigten Säuren wie Acrylsäure, Methacrylsäure und/oder deren Derivaten wie Acrylsäureestern und/oder Acrylsäureamiden, Methacrylsäureestern und/oder Styrol oder Styrolderivaten.

3. Farbmittelzusammensetzungen nach Anspruch 1 oder 2, **dadurch gekennzeichnet, dass** sie als Farbmittel B Pigmentpulver oder wässrige Pigmentpräparationen enthalten.

4. Farbmittelzusammensetzungen nach einem oder nach mehreren der Ansprüche 1 bis 3, **dadurch gekennzeichnet, dass** sie als Farbmittel B Farbstoffe enthalten.

5. Farbmittelzusammensetzungen nach einem oder nach mehreren der Ansprüche 1 bis 4, **dadurch gekennzeichnet, dass** sie als filmbildendes Netzmittel C ethoxylierte Wachse oder ethoxylierte Fettderivate enthalten.

6. Farbmittelzusammensetzungen nach einem oder nach mehreren der Ansprüche 1 bis 5, **dadurch gekennzeichnet, dass** sie Wachscopolymer A in einer Menge von 1 bis 99 Gew.-%, Farbmittel B in einer Menge von 0,1 bis 40 Gew.-% und filmbildendes Netzmittel C in einer Menge von 1 bis 60 Gew.-% enthält, bezogen jeweils auf den Feststoffgehalt der wässrigen Farbmittelzusammensetzung.

7. Verwendung einer Farbmittelzusammensetzung nach einem oder nach mehreren der Ansprüche 1 bis 6 zum Einfärben von Saatgut.

8. Verwendung einer Farbmittelzusammensetzungen nach einem oder nach mehreren der Ansprüche 1 bis 6 in Kombination mit einem Pflanzenschutzwirkstoff zum Beizen von Saatgut.
